(19) Europäisches Patentamt
European Patent Office
Office européen des brevets

(11) Veröffentlichungsnummer : **0 412 408 B1**

(12) # EUROPÄISCHE PATENTSCHRIFT

(45) Veröffentlichungstag der Patentschrift :
**11.10.95 Patentblatt 95/41**

(51) Int. Cl.$^6$ : **G02F 1/1337**

(21) Anmeldenummer : **90114643.1**

(22) Anmeldetag : **31.07.90**

(54) **Elektrisch leitfähige Polymere und ihre Verwendung als Orientierungsschicht in Flüssigkristall-Schalt- und Anzeigeelementen.**

(30) Priorität : **05.08.89 DE 3925970**

(43) Veröffentlichungstag der Anmeldung :
**13.02.91 Patentblatt 91/07**

(45) Bekanntmachung des Hinweises auf die Patenterteilung :
**11.10.95 Patentblatt 95/41**

(84) Benannte Vertragsstaaten :
**DE GB**

(56) Entgegenhaltungen :
**EP-A- 0 353 760**
**JAPANESE JOURNAL OF APPLIED PHYSICS, Band 28, Nr. 1, Januar 1989, Seiten L116-L118; K. NAKAYA et al.: "Electrooptic bistability of a ferroelectric liquid crystal device prepared using charge-transfer complex-doped polyimide-orientation films"**

(73) Patentinhaber : **HOECHST AKTIENGESELLSCHAFT**
**D-65926 Frankfurt am Main (DE)**

(72) Erfinder : **Escher, Claus, Dr.**
**Amselweg 3**
**D-6109 Mühltal (DE)**
Erfinder : **Dübal, Hans-Rolf, Dr.**
**Heuhohlweg 6**
**D-6240 Königstein/Taunus (DE)**
Erfinder : **Feldhues, Michael, Dr.**
**Im Weiber 18**
**D-6232 Bad Soden am Taunus (DE)**
Erfinder : **Harada, Takamasa**
**Kolberger Strasse 26**
**D-6370 Oberursel (DE)**
Erfinder : **Illian, Gerhard, Dr.**
**Rauenthaler Weg 32**
**D-6000 frankfurt am Main (DE)**
Erfinder : **Mecklenburg, Thomas, Dr.**
**Freiherr-vom-Stein Strasse 20**
**D-6308 Butzbach (DE)**
Erfinder : **Murakami, Mikio**
**New Town Blg. 202, 8-1,**
**Minami 2-chome**
**Kakegawa-shi, Shizuoka-ken (JP)**
Erfinder : **Ohlendorf, Dieter, Dr.**
**Am Kühlen Grund 4**
**D-6237 Liederbach (DE)**
Erfinder : **Pampus, Karl, Dr.**
**Parkstrasse 14**
**D-6233 kelkheim/Taunus (DE)**

**EP 0 412 408 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Schalt- und Anzeigeelemente, bei denen ferroelektrische Flüssigkristalle als Schalt- und Anzeigemedium dienen (FLC-Displays), werden beispielsweise in US-A 4,367,924 beschrieben. Sie enthalten eine Schicht aus einem ferroelektrischen flüssigkristallinen Medium (FLC), die beiderseitig von elektrisch isolierenden Schichten, Elektroden und Begrenzungsscheiben, üblicherweise Glasscheiben, eingeschlossen ist. Außerdem enthalten sie einen Polarisator, wenn sie im Guest-Host-Mode, und zwei Polarisatoren, wenn sie im Doppelbrechungs-Mode betrieben werden. Die elektrisch isolierenden Schichten sollen elektrische Kurzschlüsse zwischen den Elektroden und die Diffusion von Ionen aus dem Glas der Begrenzungsscheiben in die flüssigkristalline Schicht verhindern. Ferner dient mindestens eine und vorzugsweise beide der isolierenden Schichten als Orientierungsschicht, die das flüssigkristalline Material in eine Konfiguration bringt, bei der die Moleküle der flüssigkristallinen Schicht mit ihren Längsachsen parallel zueinander liegen, und in der die smektischen Ebenen senkrecht oder schräg zur Orientierungsschicht angeordnet sind. In dieser Anordnung gibt es für die FLC-Moleküle zwei mögliche und gleichwertige Orientierungen, in die sie durch pulsartiges Anlegen eines elektrisches Feldes gebracht werden können. Sie verharren jeweils in der zuletzt erzeugten Orientierung, auch wenn das Feld abgeschaltet oder das Display kurzgeschlossen wird. FLC-Displays sind also bistabil schaltbar. Die Schaltzeiten liegen im Bereich von µs und sind um so kürzer, je höher die spontane Polarisation des verwendeten flüssigkristallinen Materials ist.

Gegenüber den bisher verwendeten Flüssigkristalldisplays, die in der Regel nicht ferroelektrisch sind, haben FLC-Displays insbesondere den Vorzug, daß das erreichbare Multiplexverhältnis, d. h. die maximale Zahl der im zeitlich sequentiellen Verfahren ("Multiplex-Verfahren") ansteuerbaren Zeilen, sehr viel größer ist als bei den bekannten nicht- ferroelektrischen Displays.

Ein Nachteil von FLC-Displays kann sich jedoch daraus ergeben, daß ein Display, das sich längere Zeit in einem der beiden stabilen Zustände befunden hat (stehendes Bild), nur sehr schwer, d. h. mit sehr hoher Amplitude oder sehr langer Pulsdauer der angelegten Spannung in den anderen Zustand umzuschalten ist, also eine ausgeprägte optische Hysterese zeigt. Bei bildhaften Anzeigen führt das dazu, daß ein längere Zeit eingeschriebenes Bild im Nachfolgebild schemenhaft als sog. "Geisterbild" zu erkennen ist. Diese Erscheinung der optischen Hysterese ist um so stärker ausgeprägt, je höher die spontane Polarisation des FLC-Materials ist. Da andererseits die Schaltzeit von FLC-Materialien zur spontanen Polarisation umgekehrt proportional ist, wird ein wichtiger Vorteil der FLC-Displays durch diese Hysterese wieder zunichte gemacht. Die Ursache dieses Phänomens ist bisher nicht eindeutig geklärt; es gibt Anzeichen dafür, daß ionische Verunreinigungen im FLC dafür verantwortlich sind.

Es wurde bereits in der prioritätsälteren, nicht-vorveröfftentlichten DE-A 3 843 228 vorgeschlagen, die beschriebene Erscheinung der optischen Hysterese in FLC-Displays dadurch stark zu vermindern oder zu unterdrücken, daß mindestens eine der Elektroden in unmittelbaren elektrischen Kontakt mit dem flüssigkristallinen Medium gebracht wird.

In der prioritätsälteren, nicht vorveröffentlichten europäischen Patentanmeldung 353 760 (benannte Vertragsstaaten DE, FR, GB, IT) sind Flüssigkristallelemente vorgeschlagen, die auf mindestens einer Substratfläche einen Film aus Polythiophen- oder Polypyrrolderivaten enthalten.

Es wurde nun überraschenderweise gefunden, daß man die optische Hysterese in FLC-Displays besonders effektiv dadurch unterdrücken kann, daß man ein Flüssigkristall-Schalt- und -Anzeigeelement verwendet, das ein ferroelektrisches flüssigkristallines Medium, zwei Elektroden, mindestens einen Polarisator, zwei transparente Trägerplatten und mindestens eine Orientierungsschicht enthält, wobei mindestens eine der Orientierungsschichten in unmittelbarem elektrischen Kontakt mit der zugehörigen Elektrode steht und diese Orientierungsschicht ein elektrisch leitfähiges Polymer enthält, das aus wiederkehrenden Einheiten der Formel (I) besteht:

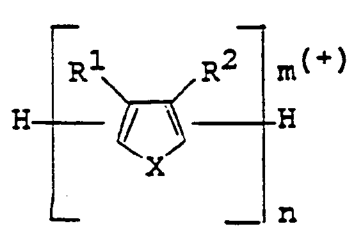 $mY^{(-)}$ (I)

wobei

$R^1$ H oder geradkettiges oder verzweigtes Alkyl oder Alkoxy mit 1-16 C-Atomen oder Halogen,

$R^2$ geradkettiges oder verzweigtes Alkoxy mit 1-16 C-Atomen oder Halogen

X S oder NH
$Y^-$ $BF_4^-$, $PF_6^-$, $PO_4^{3-}$, $AsF_6^-$, $SbCl_6^-$, $SO_4^{2-}$, $HSO_4^-$, Alkyl-$SO_3^-$, Perfluoralkyl-$SO_3^-$, Aryl-$SO_3^-$, $F^-$ oder $Cl^-$,
n eine ganze Zahl von 4 bis 100 und
m eine ganze Zahl von 1 bis 30 bedeuten.

Elektrisch leitfähige Polymere, die in oxidierter Form in dipolar aprotischen Lösungsmitteln bei Raumtemperatur löslich sind und die sich von einem Monomer der Formel (II) ableiten

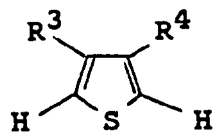

(II)

wobei zumindest einer der beiden Reste $R^3$ und $R^4$ eine Alkoxygruppe bedeuten und der andere gegebenenfalls ($C_1$-$C_6$)-Alkyl oder Wasserstoff ist, wurden bereits in den DE-A 3 717 668, DE-A 3 628 895 und DE-A 3 736 114 beschrieben. Auch die Darstellung, die Stabilität und elektrische Leitfähigkeit der verschiedenen positiv dotierten Polymere wurden an dieser Stelle untersucht.

Für die Anwendung in Flüssigkristall-Schalt- und Anzeigelementen sind elektrisch leitfähige Polymere der Formel (I) mit einem (positiven) Dotierungsgrad von 10 bis 30 % besonders geeignet, wobei der Dotierungsgrad das Verhältnis von elektrischer Ladung (m) des Polymers zur Anzahl der Monomereinheiten, aus denen es aufgebaut ist (n), angibt. Die undotierten Polymere besitzen nur eine vernachlässigbar kleine elektrische Leitfähigkeit, hochdotierte Polymere (polymere Radikalkationen) sind zumeist instabil oder schwer zugänglich.

Besonders bevorzugt werden solche leitfähigen Polymere als Bestandteil der Orientierungsschichten in FLC-Displays eingesetzt, bei denen in der Formel (I) n eine ganze Zahl von 4 bis 30 und m eine ganze Zahl von 1 bis 9 bedeuten, ganz besonders bevorzugt wird für n eine ganze Zahl von 4 bis 10 und für m eine ganze Zahl von 1 bis 4.

Bevorzugt werden ferner leitfähige Polymere eingesetzt, bei denen X in der Formel (I) ein Schwefelatom bedeutet, und die als Anion ($Y^-$) $BF_4^-$, $PO_4^{3-}$, $SO_4^{2-}$, $HSO_4^-$, $F^-$ und/oder $Cl^-$ enthalten.

Bevorzugterweise enthält die Orientierungsschicht 30 bis 100 Gew.-% des leitfähigen Polymers der allgemeinen Formel (I). Als andere Komponenten kommen sowohl elektrisch leitfähige Materialien wie auch nicht leitende Stoffe, insbesondere organische Polymere, in Frage.

Die Orientierungsschicht enthält im Flüssigkristall-Schalt- und -Anzeigeelement in einer weiteren Ausführungsform der Erfindung neben einem Polymer der Formel (I) ein nichtleitfähiges Polymer wie z.B. Polyvinylformal, Poly-vinylacetal, Poly-vinylbutyral, Poly-vinylacetat, Poly-vinylchlorid, Poly-vinylmethylether, Poly-vinylmethylketon, Poly-maleinsäureanhydrid, Poly-styrol, Poly-N-vinylcarbazol, Poly-N-vinylpyrrolidon, Poly-vinylpyridin, Poly-methylacrylat, Poly-methylmethacrylat, Poly-acrylnitril, Polyacetaldehyd, Polyacrolein, Poly-ethylenoxid, Poly-tetrahydrofuran, aliphatische Polyester, Poly-carbonat, Poly-butylisocyanat, natürliches Gummi, Poly-urethan, Methylcellulose, Ethylcellulose, Cellulosetriacetat oder Poly-methylsiloxan. Die Orientierungsschicht kann aber auch weitere leitfähige Polymere enthalten.

Insbesondere bei großflächigen Displays kann es zur Vermeidung von Kurzschlüssen zweckmäßig sein, daß eine der Orientierungsschichten aus einem elektrisch leitfähigen Polymer besteht, während die andere eine elektrisch isolierende Schicht darstellt.

Die Verminderung der optischen Hysterese ist um so ausgeprägter, je höher die elektrische Leitfähigkeit der Polymere ist. Ihre spezifische Leitfähigkeit soll daher in der Richtung senkrecht zu ihrer Ebene mindestens $10^{-5}$ Siemens · $m^{-1}$ und ihre Leitfähigkeit mindestens 100 Siemens · $m^{-2}$ betragen.

Die Erfindung wird auch durch die anliegende Zeichnung näher erläutert:

Das Phänomen der optischen Hysterese ist in Figur 1 dargestellt.

Ein FLC-Display wird einer Folge von bipolaren Spannungspulsen unterworfen (Fig. 1a), und zwar folgt jeweils auf einen "Reset-Puls" R, der so groß ist, daß das Display in jedem Fall schaltet, ein inverser Testpuls T. Ist die Spannung des Testpulses ($V_t$) groß genug, so schaltet das Display in umgekehrter Richtung wie beim Reset-Puls, was zu einer blinkenden Anzeige des Displays führt. Die Mindestspannung (kritische Spannung des Testpulses) $V_t^c$ (Fig. 1b), die zum Schalten durch den Testpuls nötig ist, ist dabei von der Vorgeschichte des Schaltens des Displays abhängig. Ist die Ausgangssituation so, daß die Testpulse zu klein zum Schalten sind, so daß eine statische Anzeige vorliegt, so führt die Erhöhung der Testpulsspannung $V_t$ erst bei relativ hohen Werten $V_{t2}^c$ (Fig. 1b) zu einer schaltenden, d. h. blinkenden, Anzeige (Fig. 1a, oben). Reduziert man ausgehend von $V_{t2}^c$ die Höhe des Testpulses (Fig. 1a unten), so schaltet das Display weiter (blinkende Anzeige), und erst bei Reduzierung der Höhe des Testpulses deutlich unterhalb $V_{t2}^c$ schaltet der Testpuls das Display nicht

mehr ($V_{t1}^{c}$), und die Anzeige wird wieder statisch. Diese "optische Hysterese" ist in Fig. 1b idealisiert dargestellt (Tr steht für die optische Transmission, $V_t$ ist die Spannung des Testpulses).

In hochinformativen Displays führt das Phänomen der optischen Hysterese dazu, daß bei Veränderung der Ansteuerspannung, die in der Praxis dem Testpuls des Experiments entspricht, einzelne Bildpunkte je nach ihrer Vorgeschichte schalten oder nicht schalten, wodurch sogenannte Geisterbilder auftreten.

In Fig. 2a und 2b sind als Ordinate die Intensität (in Volt; die proportional zur Transmission ist) und als Abszisse die elektrische Feldstärke (in Volt/μm) aufgetragen.

Fig. 2 zeigt im Vergleich die nach der oben erläuterten Methode gewonnene Hysteresekurve eines bekannten Displays, bei dem die Elektroden durch eine Orientierungsschicht gegen den FLC isoliert sind (Fig. 2a), und eines erfindungsgemäßen Displays, bei dem zwei Orientierungsschichten aus geriebenem leitfähigen Polymer in unmittelbarem Kontakt mit dem FLC stehen (Fig. 2b). Die weitgehende Unterdrückung der Hysterese im letzteren Fall ist deutlich erkennbar.

Wegen seiner guten Orientierungseigenschaft (gute planare Orientierung) und seiner hohen elektrischen Leitfähigkeit hat sich die Verwendung eines Polymers der Formel (III)

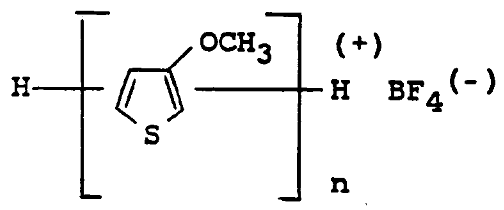

(III)

wobei

n = 5 oder 6 ist,

als besonders vorteilhaft für Orientierungsschichten in Displays erwiesen. Die genaue Vorgehensweise bei der Beschichtung sowie die elektrooptischen Resultate sind in Beispiel 1 erläutert.

Zur Erzielung hoher optischer Transparenz kann es vorteilhaft sein, statt eines reinen Polymers ein Polymer-Blend zu verwenden. So führt das Mischsystem aus dem Polymer gemäß Formel (III) und einem Polymethacrylat der Formel (IV)

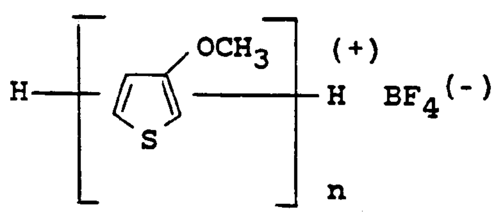

(III)

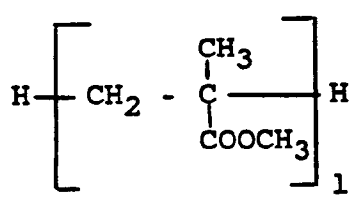

(IV)

zu einer deutlich verbesserten optischen Transparenz. Als weitere Bestandteile für Polymer-Blends sind die oben genannten nicht leitfähigen Polymere ebenfalls besonders geeignet.

Die Erfindung wird durch die nachfolgenden Beispiele verdeutlicht.

**Beispiel 1**

Eine 2 %ige Nitromethanlösung eines elektrisch leitfähigen Polymers mit der folgenden Strukturformel,

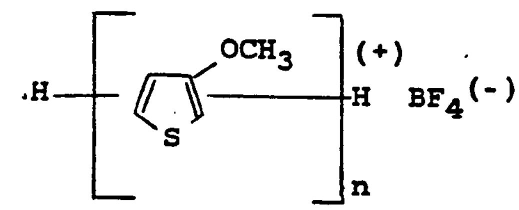

wobei n gleich 5 oder 6 bedeutet,
wird durch ein Spin-Beschichtungsverfahren mit 1500 Umdrehungen/Minute auf einem 1 mm starken Glassubstrat, das vorher mit einer transparenten Elektrode versehen worden ist, 30 Sekunden lang aufgeschleudert. Das Substrat und die Schicht aus der darauf abgeschiedenen Lösung werden bei 120°C in einem Trockenschrank getempert, um das Lösungsmittel durch Destillation anzutreiben. Man erhält eine Polymerschicht mit 100 nm Schichtdicke, die anschließend mit Hilfe einer Reibemaschine jeweils 2 mal in gleicher Richtung schwach gerieben wird. Man erhält eine homogene, schwach bläuliche Polymerschicht mit 100 nm Dicke und mit einer spezifischen elektrischen Leitfähigkeit von 8,0 x $10^{-3}$ S/cm. Jeweils zwei der so erhaltenen und mit dem gleichen Polymer beschichteten Glassubstrate werden parallel sowie antiparallel aufeinander gelegt. Die Substrate werden mit Hilfe von Abstandshaltern zu einer Zelle mit einem Elektrodenabstand von 2,4 µm verklebt. Die Zelle wird mit der handelsüblichen, ferroelektrischen Mischung ®Felix 002 (eingetragenes Warenzeichen der Hoechst AG) gefüllt. Es wird eine gute Bistabilität gefunden. Die Zelle zeigt fast keine optische Hysterese, was durch die in Fig. 2b widergegebenen Ergebnisse belegt wird. Die optische Transparenz der Polymerschicht bei einer Wellenlänge von 550 nm beträgt ca. 50 %.

**Beispiel 2**

Die folgenden Bestandteile werden durch Rühren in 100 $cm^3$ γ-Butyrolacton gelöst: 1,0 g des vorstehend beschriebenen elektrisch leitfähigen Polymeren aus Beispiel 1 und 1,0 g eines Poly-methylmethacrylates der Formel (IV), das aus 50 bis 100 Monomereinheiten (1 = 50 bis 100) besteht. Die Lösung wird in gleicher Weise wie in Beispiel 1 beschrieben auf einem Glassubstrat aufgebracht, das vorher mit einer transparenten Elektrode versehen worden ist. Nach einstündigem Tempern bei 180°C ergibt sich eine Schichtdicke von 150 nm. Eine Flüssigkristallzelle mit einer 2 µm dicken Flüssigkristallschicht wird durch Ausrichtungs-Behandlung der Substrate in derselben Weise wie in Beispiel 1 hergestellt. Die Zelle wird mit der handelsüblichen ferroelektrischen Flüssigkristall-Mischung ®Felix 002 (Hersteller: Hoechst AG) gefüllt. Es wird eine gute Bistabilität gefunden. Das Flüssigkristall-Schaltelement zeigt fast keine optische Hysterese. Als optische Transparenz der Orientierungsschicht bei einer Lichtwellenlänge von 550 nm werden 77 % gemessen.

## Patentansprüche

1. Flüssigkristall-Schalt- und Anzeigeelemente enthaltend ein ferroelektrisches flüssigkristallines Medium, zwei Elektroden, mindestens einen Polarisator, zwei transparente Trägerplatten sowie mindestens eine Orientierungsschicht, dadurch gekennzeichnet, daß mindestens eine der Orientierungsschichten in unmittelbarem elektrischen Kontakt mit der zugehörigen Elektrode steht und diese Orientierungsschicht ein elektrisch leitfähiges Polymer der allgemeinen Formel (I) enthält

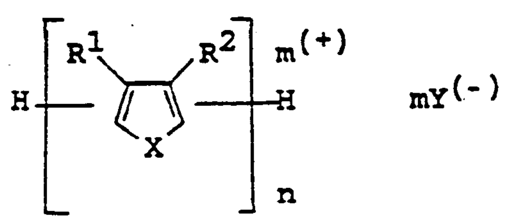

(I)

wobei
$R^1$ = H oder geradkettiges oder verzweigtes Alkyl oder Alkoxy mit 1-16 C-Atomen oder Halogen
$R^2$ = geradkettiges oder verzweigtes Alkoxy mit 1-16 C-Atomen oder Halogen
X = S, NH

$Y^-$ = $BF_4^-$, $PF_6^-$, $PO_4^{3-}$, $AsF_6^-$, $SbCl_6^-$, $SO_4^{2-}$, $HSO_4^-$, Alkyl-$SO_3^-$, Perfluoralkyl-$SO_3^-$, Aryl-$SO_3^-$, $F^-$, $Cl^-$, und
n = eine ganze Zahl von 4 bis 100
m = eine ganze Zahl von 1 bis 30 bedeuten.

**2.** Flüssigkristall-Schalt- und Anzeigeelement gemäß Anspruch 1, dadurch gekennzeichnet, daß n eine ganze Zahl von 4 bis 30 ist, m eine ganze Zahl von 1 bis 9 bedeutet und $R^1$, $R^2$, X und Y die genannten Bedeutungen tragen.

**3.** Flüssigkristall-Schalt- und Anzeigeelement gemäß Anspruch 2, dadurch gekennzeichnet, daß X ein Schwefelatom bedeutet, $Y^-$ gleich $BF_4^-$, $PO_4^{3-}$, $SO_4^{2-}$, $HSO_4^-$, $F^-$ oder $Cl^-$ ist
und $R^1$, $R^2$, n und m die genannten Bedeutungen tragen.

**4.** Flüssigkristall-Schalt- und Anzeigeelement gemäß Anspruch 1, dadurch gekennzeichnet, daß die Orientierungsschicht neben einem Polymer der Formel (I) mindestens ein nicht-leitfähiges Polymer enthält.

**5.** Flüssigkristall-Schalt- und -Anzeigeleement gemäß Anspruch 1, dadurch gekennzeichnet, daß die Orientierungsschicht, neben einem Polymer der Formel (I) mindestens ein weiteres leitfähiges Polymer enthält.

**6.** Verwendung von elektrisch leitfähigen Polymeren der allgemeinen Formel (I) aus Anspruch 1 als Komponente für die Orientierungsschicht(en) in Flüssigkristall-Schalt- und Anzeigeelementen.

## Claims

**1.** A liquid-crystal switching and display element containing a ferroelectric liquid-crystalline medium, two electrodes, at least one polarizer, two transparent carrier plates and also at least one orienting layer, wherein at least one of the orienting layers is in direct electrical contact with the associated electrode and said orienting layer contains an electrically conductive polymer of the formula (I)

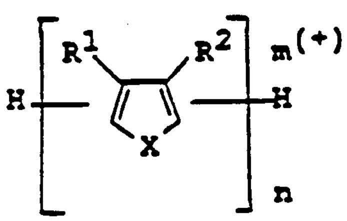

$mY^{(-)}$ (I)

in which
$R^1$ = H, or straight- chain or branched alkyl or alkoxy containing 1-16 carbon atoms, or halogen,
$R^2$ = straight-chain or branched alkoxy containing 1-16 carbon atoms, or halogen,
X = S, NH,
$Y^-$ = $BF_4^-$, $PF_6^-$, $PO_4^{3-}$, $AsF_6^-$, $SbCl_6^-$, $SO_4^{2-}$, $HSO_4^-$, alkyl-$SO_3^-$, perfluoroalkyl-$SO_3^-$, aryl-$SO_3^-$, $F^-$ or $Cl^-$, and
n = an integer from 4 to 100,
m = an integer from 1 to 30.

**2.** The liquid-crystal switching and display element as claimed in claim 1, wherein n is an integer from 4 to 30, m is an integer from 1 to 9 and $R^1$, $R^2$, X and Y have the meanings specified.

**3.** The liquid-crystal switching and display element as claimed in claim 2, wherein X is a sulfur atom, $Y^-$ is equal to $BF_4^-$, $PO_4^{3-}$, $SO_4^{2-}$, $HSO_4^-$, $F^-$ or $Cl^-$, and $R^1$, $R^2$, n and m have the meanings specified.

**4.** The liquid-crystal switching and display element as claimed in claim 1, wherein the orienting layer contains in addition to a polymer of the formula (I) at least one nonconductive polymer.

**5.** The liquid-crystal switching and display element as claimed in claim 1, wherein the orienting layer contains in addition to a polymer of the formula (I) at least one further conductive polymer.

6. The use of electrically conductive polymers of the formula (I) as claimed in claim 1 as a component for the orienting layer or layers in liquid-crystal switching and display elements.

## Revendications

1. Elément de commutation et d'affichage à cristaux liquides contenant un milieu de cristaux liquides ferroélectrique, deux électrodes, au moins un polariseur, deux plaques support transparentes ainsi qu'au moins une couche d'orientation, caractérisé en ce que au moins une des couches d'orientation se trouve directement en contact électrique avec l'électrode correspondante et cette couche d'orientation contient un polymère électroconducteur de formule générale (I)

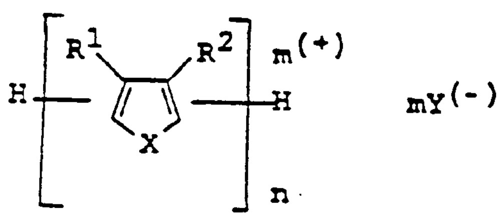

(I)

| | |
|---|---|
| $R^1$ | représentant H ou alcoxy ou alkyle linéaire ou ramifié avec 1 à 16 atomes de C ou halogène, |
| $R^2$ | représentant alcoxy linéaire ou ramifié avec 1 à 16 atomes de C ou halogène |
| X | représentant S, NH |
| $Y^-$ | représentant $BF_4^-$, $PF_6^-$, $PO_4^{3-}$, $AsF_6^-$, $SbCl_6^-$, $SO_4^{2-}$, $HSO_4^-$, alkyl-$SO_3^-$, perfluoroalkyl-$SO_3^-$, aryl-$SO_3^-$, $F^-$, $Cl^-$ et |
| n | représentant un nombre entier de 4 à 100 |
| m | représentant un nombre entier de 1 à 30. |

2. Elément de commutation et d'affichage à cristaux liquides selon la revendication 1, caractérisé en ce que n est un nombre entier de 4 à 30, m est un nombre entier de 1 à 9 et $R^1$, $R^2$, X et Y ont les significations citées.

3. Elément de commutation et d'affichage à cristaux liquides selon la revendication 2, caractérisé en ce que X représente un atome de soufre, $Y^-$ correspond à $BF_4^-$, $PO_4^{3-}$, $SO_4^{2-}$, $HSO_4^-$, $F^-$ ou $Cl^-$ et $R^1$, $R^2$, n et m ont les significations citées.

4. Elément de commutation et d'affichage à cristaux liquides selon la revendication 1, caractérisé en ce que la couche d'orientation contient,outre un polymère de formule (I) au moins un polymère non-conducteur.

5. Elément de commutation et d'affichage à cristaux liquides selon la revendication 1, caractérisé en ce que la couche d'orientation contient, outre un polymère de formule (I), au moins un autre polymère conducteur.

6. Utilisation de polymères électroconducteurs de formule générale (I) selon la revendication 1 en tant que composant pour la (les) couche(s) d'orientation dans les éléments de commutation et d'affichage à cristaux liquides.

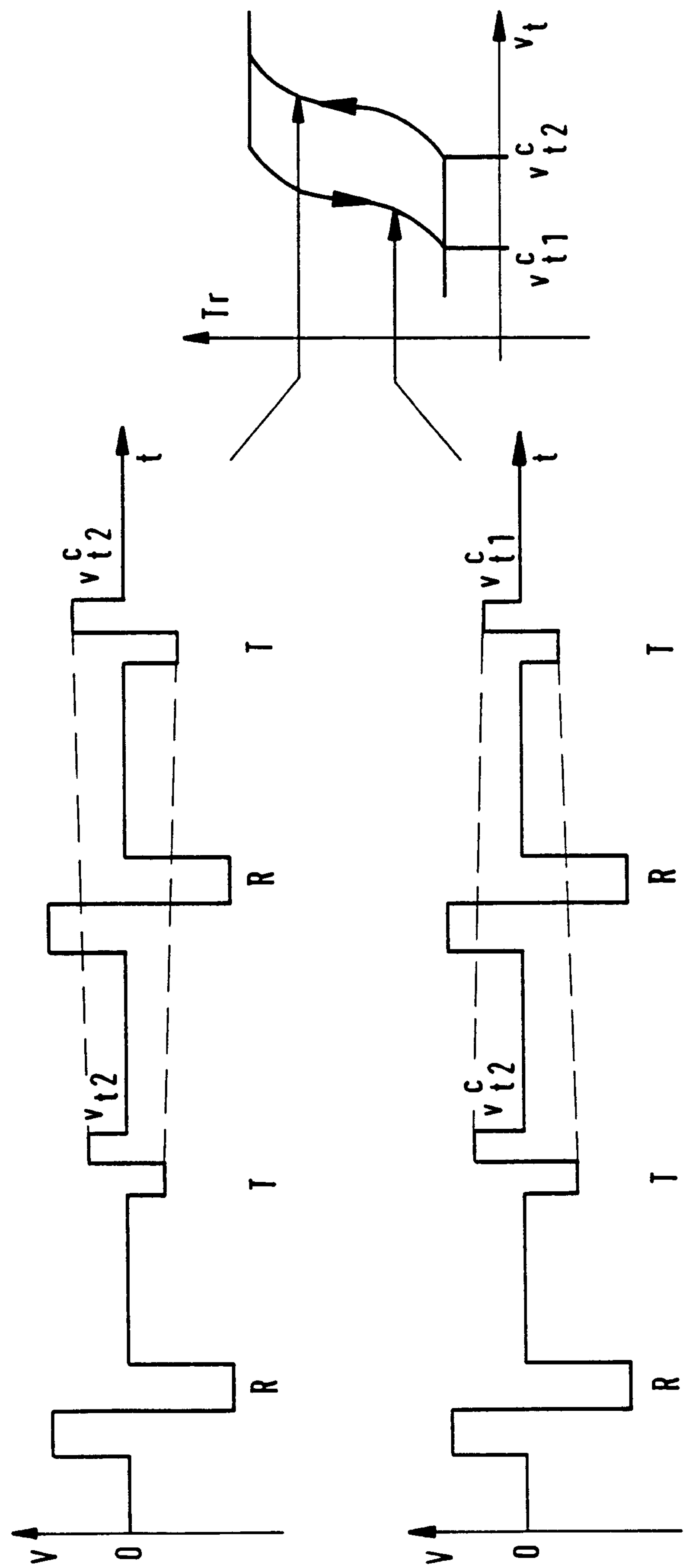


FIG. 1a

FIG. 1b

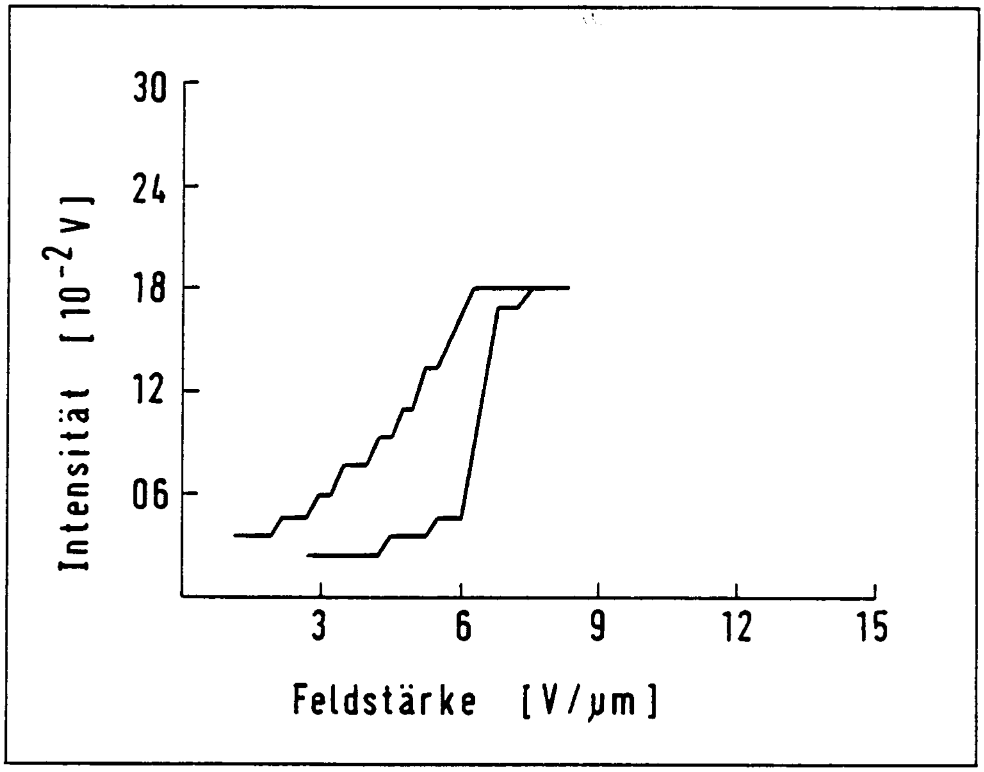
30
24
18
12
06
Intensität [10^-2 V]
3
6
9
12
15
Feldstärke [V/µm]

FIG. 2a

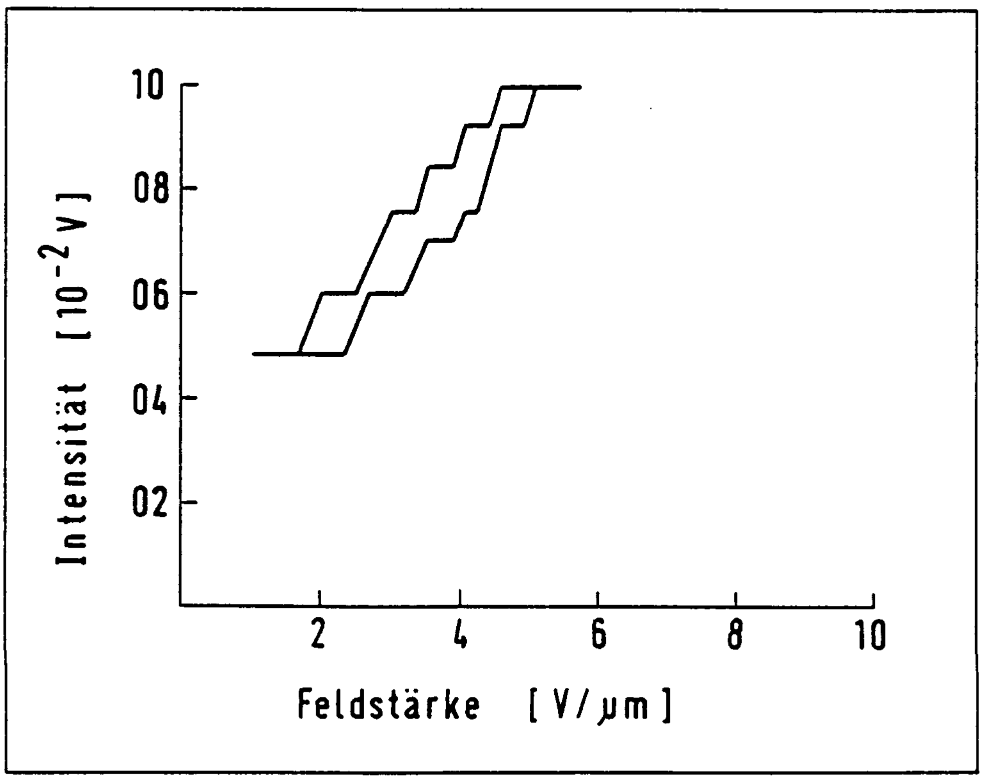
10
08
06
04
02
Intensität [10^-2 V]
2
4
6
8
10
Feldstärke [V/µm]

FIG. 2b